(19) Europäisches Patentamt
European Patent Office
Office européen des brevets

(11) EP 3 037 955 A2

(12) EUROPEAN PATENT APPLICATION

(43) Date of publication:
29.06.2016 Bulletin 2016/26

(51) Int Cl.:
G06F 3/14 (2006.01)
G01J 3/50 (2006.01)
G09F 9/302 (2006.01)
H04N 1/60 (2006.01)

(21) Application number: 15180421.8

(22) Date of filing: 10.08.2015

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR
Designated Extension States:
BA ME
Designated Validation States:
MA

(30) Priority: 05.12.2014 TW 103142450

(71) Applicant: ATEN International Co., Ltd.
New Taipei City 221 (TW)

(72) Inventors:
• KAO, Kuo-Feng
221 New Taipei City (TW)
• CHU, Hung-Chi
221 New Taipei City (TW)

(74) Representative: dompatent von Kreisler Selting
Werner -
Partnerschaft von Patent- und Rechtsanwälten
mbB
Deichmannhaus am Dom
Bahnhofsvorplatz 1
50667 Köln (DE)

(54) CALIBRATION SYSTEM AND METHOD FOR MULTI-DISPLAY SYSTEM

(57) A calibration system and a calibration method for a multi-display system are disclosed. Test patterns displayed on each screen of the multi-display system are captured by a handheld device. One of the captured images corresponding to a specific display is designated as a standard image such that the handheld device can compare the other captured images corresponding to the other displays with the standard image to determine at least one adjustment parameter for each display. The images output to each display can be adjusted according to the adjustment parameter so as to eliminate the display differences between the images.

FIG. 1

## Description

BACKGROUND OF THE INVENTION

Field of the Invention

This invention relates to a calibration system and method for multi-display systems, and in particular, it relates to calibration system and method for correcting display differences in multi-display systems.

Description of the Related Art

Multi-display systems, such as TV walls, are used for advertisement or for other large displays. As a multi-display system is formed by multiple display screens, sometimes the brightness or color of the displayed images may vary among the screens due to hardware variations.

Thus, sometimes a user will choose to acquire special display screens from a manufacturer, where the manufacturer calibrates the display screens before delivering them to the user, and the user performs fine adjustments when installing the display screens. This procedure can be cumbersome and costly.

Even when the user acquires multiple display screens from the same manufacturer manufactured in the same batch, the screens can still have small differences in display results, so fine adjustments of the screens of a multi-display system are required.

SUMMARY OF THE INVENTION

Accordingly, one aspect of the present invention is to provide a calibration system for multi-display systems, which includes: a video switch device for outputting test patterns, the video switch device including a first output port and a second output port; first and second display devices, respectively coupled to the first and second output ports; a handheld device, for capturing test patterns displayed on the first display device and test patterns displayed on the second display device, determining at least one adjustment parameter using the test patterns of the first display device as a standard, and transmitting the at least one adjustment parameter to the video switch device, wherein the video switch device adjusts video images to be outputted to the second output port based on the at least one adjustment parameter.

Another aspect of the present invention is to provide a calibration method for multi-display systems, which includes: providing a multi-display system including a video switch device and first and second display devices, the video switch device outputting test patterns, the video switch device including first and second output ports for respectively coupling to the first and second display devices; using a handheld device and via a control program, capturing the test patterns displayed on the first display device and the test patterns displayed on the second display device; the handheld device determining at least one adjustment parameter using the test patterns on the first display device as a standard, and transmitting the at least one adjustment parameter to the video switch device; and the video switch device adjusting video images to be outputted to the second display device based on the at least one adjustment parameter.

Compared to conventional technologies, the calibration system and method for multi-display systems according to embodiments of the present invention utilizes a handheld device for fast and convenient calibration of display effects of multiple display devices.

BRIEF DESCRIPTION OF THE DRAWINGS

FIG. 1 schematically illustrates a calibration system for a multi-display system according to an embodiment of the present invention.
FIG. 2A~FIG. 2E schematically illustrate an embodiment of the present invention.
FIG. 3 is a flow chart showing a calibration method for a multi-display system according to an embodiment of the present invention.

DETAILED DESCRIPTION OF THE PREFERRED EMBODIMENTS

Embodiments of the present invention are described in detail with reference to the figures. It should be noted that the invention is not limited to the detailed descriptions. Further, certain common components are illustrated in the drawings in simplified schematic representations.

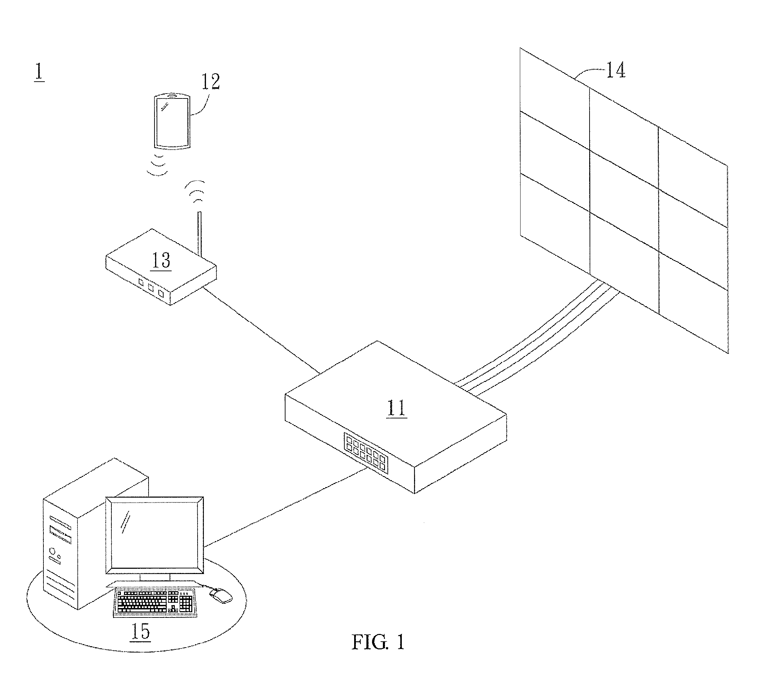

Refer to FIG. 1, which schematically illustrates a calibration system for a multi-display system according to an embodiment of the present invention. The multi-display calibration system 1 includes a video switch device 11, a handheld device 12, a wireless base station 13, a multi-display system 14, and a video source 15. The video switch device 11 includes multiple connection ports corresponding to the multiple display devices of the multi-display system 14. The video switch device outputs test patterns in response to commands from the handheld device 12. In one embodiment, the test patterns are generated by the handheld device and transmitted to the video switch device 11; in another embodiment, the test patterns are stored in a memory of the video switch device 11. The wireless base station 13 is connected, e.g. by a wired means such as a Local Area Network (LAN), to the video switch device 11, and communicates with the handheld device 12 wirelessly to transmit signals to each other. It should be noted that the wireless base station 13 is only one way for the handheld device 12 to communicate with the video switch device 11; the handheld device 12 and the video switch device 11 can also communicate with each using other wireless means, such as Bluetooth, so the communication means is not limited to using the wireless base station 13. Of course, in other embodiment, the handheld device 12 and the video switch device 11 can also communicate with each other using wired means. The video switch device 11 includes at least one input port, such as, without limitation, VGA, DVI or HDMI interfaces, to connect to the one or more video source 15. The video source 15 outputs video signals to the video switch device 11. The video source 15 may be an audio-visual player such as a Blu-ray or DVD player, or a computer, but are not limited to the above. Based on the input video signal, the video switch device 11 generates multiple divided video signals to be displayed on the multi-display system 14 (i.e., each display screen displays a part of an original image and the multiple screens together form the original image). The video switch device 11 can also output video signals from the one or more video sources 15 independently to the individual display screens of the multi-display system 14 (so that the multiple screens display independent images), or output divided video images to some display screens and independent images to other display screens.

In practice, the video switch device 11 may be, without limitation, a keyboard-video-mouse (KVM) switch, or an audio-video switch, and audio-video switch array, etc. The handheld device 12 may be, without limitation, a smart phone, tablet computer, or another mobile device.

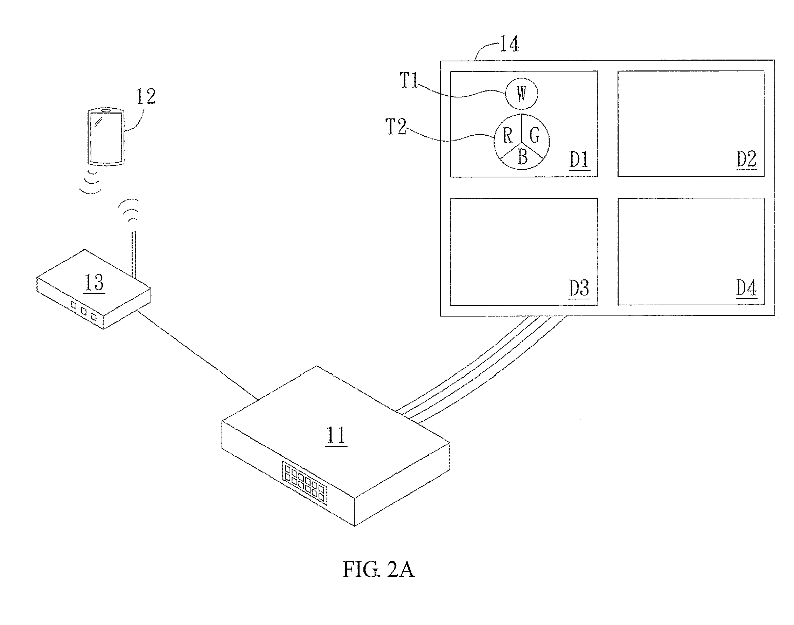

Refer to FIG. 2A~FIG. 2B, which illustrate a calibration process according to an embodiment of the present invention. In this embodiment, the video switch device 11 has four output ports respectively coupled to four display devices D1-D4, i.e., the first output port is coupled to the first display device D1, the second output port is coupled to the second display device D2, the third output port is coupled to the third display device D3, and the fourth output port is coupled to the fourth display device D4. First, the handheld device 12, which runs a control program, captures test patterns displayed on the multiple display devices. In this step, the control program designates one of the output ports of the video switch device 11 as the standard port, and the image characteristics of the image outputted from the standard port and displayed by the corresponding display device are used as the standard to calibrate the image characteristics of the other images, i.e. images outputted from the other ports and displayed by the corresponding other display devices. The image characteristics may be data about one of the three primary colors, i.e. the red color information, green color information and blue color information, or brightness information, or their combinations. In this embodiment, after the handheld device 12 designates the standard port, the handheld device 12 transmits a command to the video switch device 11 to control the video switch device 11 to output test patterns via the first port to the first display device D1.

In this embodiment, as shown in FIG. 2A, the test patterns include a test pattern T1 and a test pattern T2. It should be understood that the handheld device 12 can designate any of the ports as the standard port; in this example the first port is the standard, but the invention is not limited to such. In one embodiment, the standard port is designated using a user interface of an application program of the handheld device 12; other methods may also be used. The test pattern T1 is a white pattern W, which provides brightness information; the test pattern T2 may be a red pattern R, a green pattern G, a blue pattern B or a combination thereof. The red pattern R provides red color information, the green pattern G provides green color information, and the blue pattern B provides blue color information. Although in the illustrated embodiment the two test patterns T1 and T2 are simultaneously displayed, in another embodiment, only the pattern T1 or the pattern T2 is displayed. In another embodiment, different from the patterns shown in FIG. 2A, the colors in the pattern T2 are displayed individually; for example, the red pattern only is displayed first, and after a time period or after receiving a control command from the handheld device 12, another color pattern is displayed, etc.

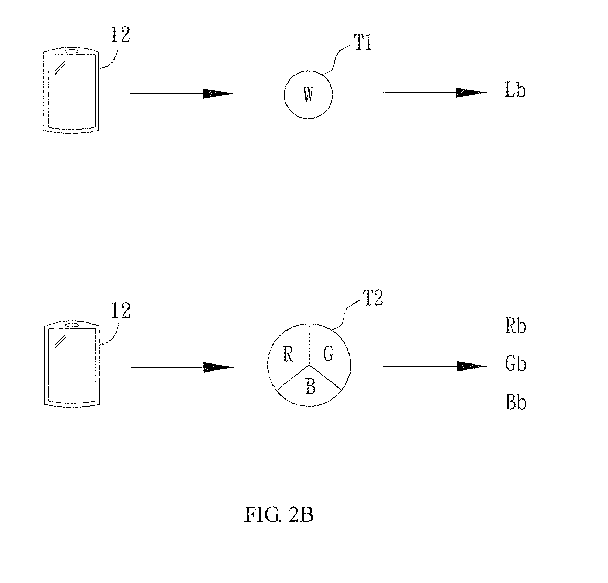

With reference to FIG. 2B, the procedure for using the handheld device to calibrate the image characteristics of the various display devices is described below. When the test patterns are displayed on the first display device D1, the handheld device 12 is held close to the first test pattern T1 on the first display device D1, and the brightness of the test pattern T1 is measured using a light sensor, such as and without limitation, a short range light sensor, of the handheld device 12. A brightness standard value Lb is obtained this way. Then, the handheld device 12 is held such that its camera lens, either the front lens or the rear lens, is close to the second test pattern T2, to respectively measure the red pattern R, green pattern G and blue pattern B of the test pattern T2, to obtain the standard image characteristic value for the red color Rb, the standard image characteristic value for the green color Gb, and the standard image characteristic value for the blue color Bb. The standard image characteristic values Lb, Rb, Gb and Bb measured from the test patterns T1 and T2 on the first display device D1 are stored in the handheld device 12.

It should be noted that in other embodiments, a light shield (not shown in the drawings) may be used with the light sensor to measure the first test pattern T1. For example, a light shielding tube may be used, with one end placed on the test pattern T1 on the display device and the other end on the light sensor. The main purpose is to prevent ambient light from affecting the light measurement. Similarly, a light shield can be used when measuring the test pattern T2 with the front or rear lens.

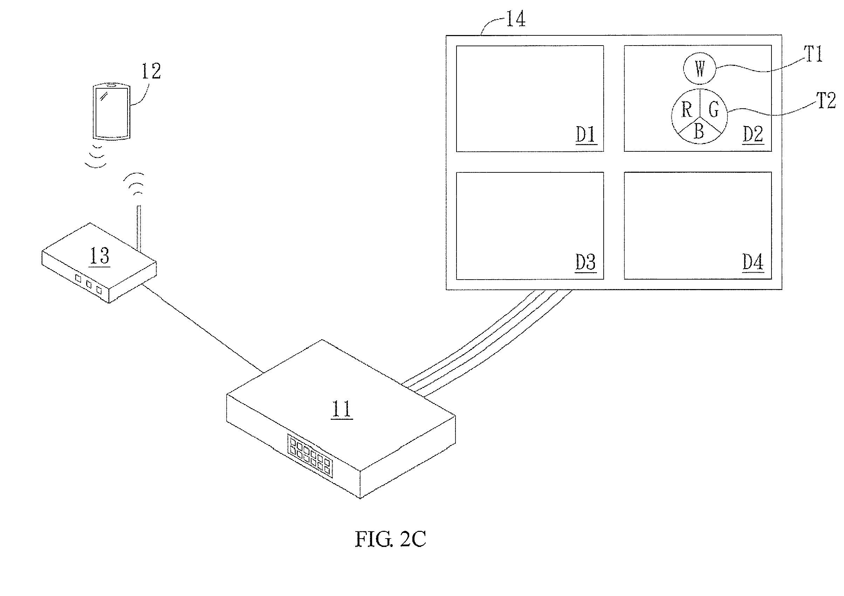

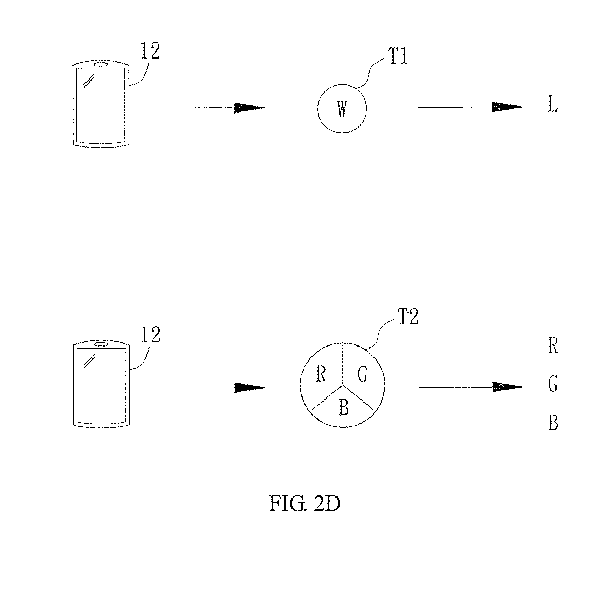

Referring to FIG. 2C and FIG. 2D, after the first port is measured as the standard, a command is sent via the handheld device 12 to instruct the video switch device 11 to output test patterns T1 and T2 to the second display device D2 coupled to the second port of the video switch device. The test patterns T1 and T2 on the second display device D2 are measured in the same way as for the test patterns on the first display device described above, to obtain brightness value Lb, image characteristic value for the red color R, image characteristic value for the green color G, and image characteristic value for the blue color B.

The handheld device 12 compares the standard image characteristic values with the image characteristic values of the second display device, to calculate adjustment parameters needed for making adjustments in order to eliminate the differences between the images on the second display device D2 and the first display device D1. In other words, the standard image characteristic value for the red color Rb is compared with the image characteristic value for the red color R, the standard image characteristic value for the green color Gb is compared with the image characteristic value for the green color G, and the standard image characteristic value for the blue color Bb is compared with the image characteristic value for the blue color B. For example, using an application program on the handheld device 12, the following adjustment parameters for the second display device D2 may be calculated: The adjustment parameter for the red color may be Rx=((Rb-R)/R), the adjustment parameter for the green color may be Gx=((Gb-G)/G), and the adjustment parameter for the blue color may be Bx=((Bb-B)/B). These equations for calculating the adjustment parameters are examples only, and the invention is not limited to these questions. Using the same procedure, the image characteristic values and adjustment parameters for the third and fourth display devices are obtained.

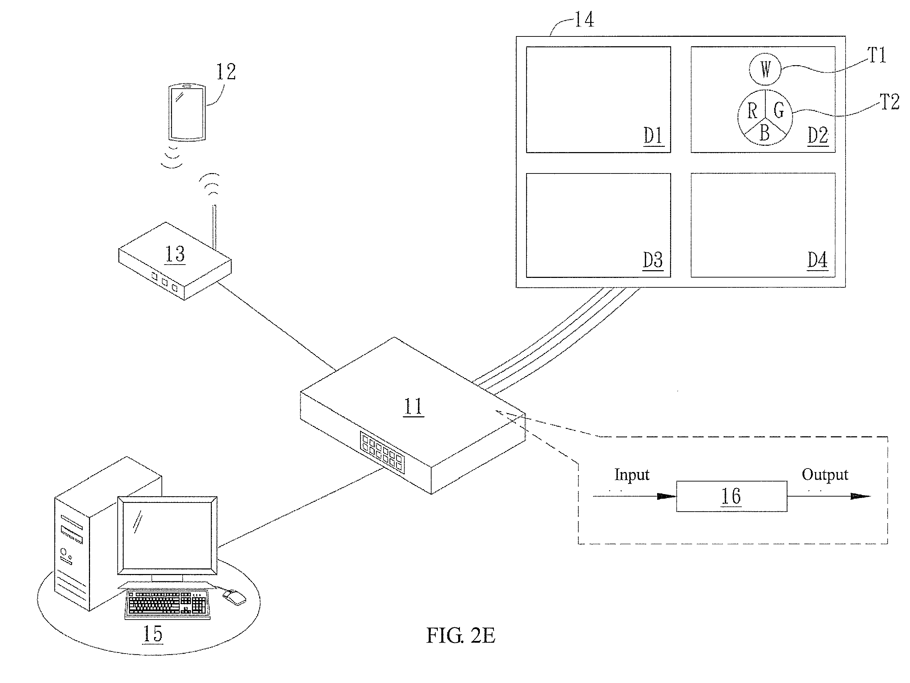

Referring to FIG. 2E, after the handheld device 12 calculates the various adjustment parameters, these values are sent to the video switch device 11 and stored there. The video switch device 11 then calibrates the second display device D2, the third display device D3 and the fourth display device D4 based on the adjustment parameters. In practice, each port of the video switch device 11 may be provided with a color calibration unit 16 to calibrate the image signal based on the adjustment parameters before outputting the image signal to the corresponding display device. In one embodiment, the color calibration unit of each port makes calibration for each color according to the following equations:

$$R' = R_{in} + R_{in} * Rx \qquad (1)$$

$$G' = G_{in} + G_{in} * Gx \qquad (2)$$

and

$$B' = B_{in} + B_{in} * Bx \qquad (3)$$

where $R_{in}$, $G_{in}$ and $B_{in}$" are red, green and blue image data inputted from the video source. Take the color calibration unit 16 for the second port as an example, it receives at its input side the red, green and blue image data from the video source 15, applies the calibration according to equations (1) to (3) above to obtain the calibrated color image data R', G; and B', and outputs the calibrated data to the second display device D2. The data for the third and fourth display devices can be processed similarly.

In this embodiment, because the first display device D1 is coupled to the first port and used as the standard, its adjustment parameters Rx, Gx, and Bx are all 0. After the calibration, the video data from the video source 15 is output via the ports to the corresponding display devices, so the colors displayed on the first display device D1 and the second display device D2 are consistent. The images for the third and fourth display devices D3 and D4 are calibrated in the same way.

For brightness compensation, in one embodiment, the user may operate the brightness control function of the display devices to adjust the brightness. Thus, when the user obtains the brightness data of the second display device D2 using the handheld device 12, the handheld device 12 can calculate the brightness difference between the second display device D2 and the first display device D1 before brightness adjustment. The user can now use a remote control or the keys on the display device to adjust the brightness of the second display device D2. During the adjustment, the handheld device 12 continuously measures the brightness of the second display device D2, and can emit signals to instruct the user about the brightness adjustment result. The emitted signals may be displayed values, sounds from the speaker, vibration, indicator lights, etc. In addition, in another embodiment, for display devices and video switch device 11 that support Consumer Electronics Control (CEC) functions, the handheld device 12 can transmit the brightness comparison result of the second display device D2 and the first display device D1 to the video switch device 11, and the video switch device 11 can automatically adjust the brightness of the second display device D2 using the CEC protocol. The brightness of the third and fourth display devices can be adjusted similarly.

It is noted that although in the above-described embodiment the display devices are adjusted one at a time, in another embodiment, the test pattern measurement step for all display devices can be performed first, so the handheld device 12 obtains the image characteristic values for all display devices and stores them; then, the user determines which port is to be used as the standard, and the handheld device 12 then calculates the adjustment parameters for all the other ports using, for example, the following equations: the adjustment parameter for the red color Rx=((Rb-R)/R), the adjustment parameter for the green color Gx=((Gb-G)/G), and the adjustment parameter for the blue color Bx=((Bb-B)/B). The adjustment parameters for each port are then transmitted to the video switch device 11.

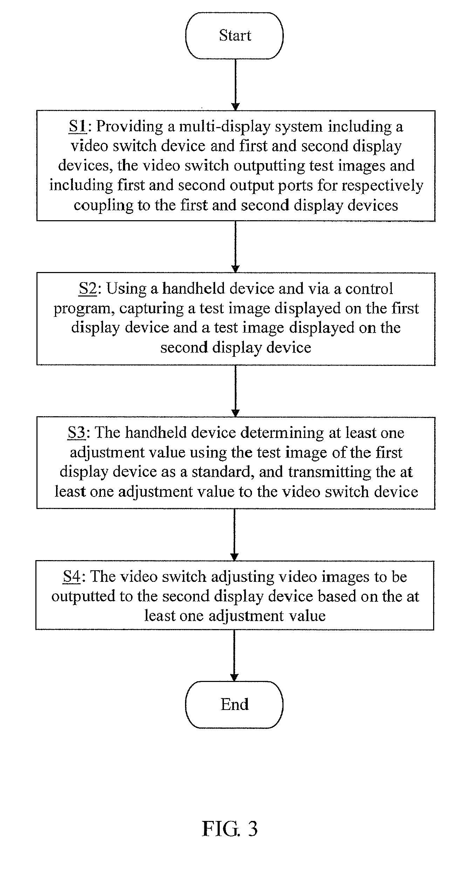

Another embodiment of the present invention is a calibration method for a multi-display system, including the following steps, as shown in FIG. 3. Step (S1): Providing a multi-display system including a video switch device and first and second display devices, the video switch outputting test patterns and including first and second output ports for respectively coupling to the first and second display devices. Step (S2): Using a handheld device and via a control program, capturing a test pattern displayed on the first display device and a test pattern displayed on the second display device. Step (S3): The handheld device determining at least one adjustment parameter using the test pattern of the first display device as a standard, and transmitting the at least one adjustment parameter to the video switch device. Step (S4): The video switch adjusting the video images to be outputted to the second display device based on the at least one adjustment parameter. In this embodiment, the implementation and system hardware framework are as explained previously.

Compared to conventional technologies, the calibration system and method for multi-display systems according to embodiments of the present invention utilizes a handheld device for fast and convenient calibration of display effects of multiple display devices.

It will be apparent to those skilled in the art that various modification and variations can be made in the calibration system and method of the present invention without departing from the spirit or scope of the invention. Thus, it is intended that the present invention cover modifications and variations that come within the scope of the appended claims and their equivalents.

**Claims**

1. A calibration system for a multi-display system, comprising:

   a video switch device for outputting test patterns, the video switch device including a first and a second output port;
   a first and a second display device, respectively coupled to the first and the second output port; and
   a handheld device, for capturing test patterns displayed on the first display device and test patterns displayed on the second display device, determining at least one adjustment parameter using the test patterns of the first display device as a standard, and transmitting the at least one adjustment parameter to the video switch device,
   wherein the video switch devices adjusts video images to be outputted to the second output port based on the at least one adjustment parameter.

2. The calibration system of claim 1, wherein the handheld device determines at least one standard image characteristic value based on the test patterns displayed on the first display device and determines at least one image characteristic value based on the test patterns displayed on the second display device, and compares the at least one standard image characteristic value and the at least one image characteristic value to calculate the at least one adjustment parameter.

3. The calibration system of claim 1, wherein the at least one image characteristic value is an image characteristic value for a red color, a green color, a blue color or a brightness, or a combination thereof.

4. The calibration system of claim 1, wherein the test patterns include a red pattern, a green pattern, a blue pattern, or a combination thereof.

5. The calibration system of claim 1, wherein the test patterns further include a white pattern having a brightness.

6. The calibration system of claim 5, wherein the handheld device includes a light sensor for measuring the brightness of the white pattern when placed adjacent to the white pattern.

7. The calibration system of claim 1, further comprising a light shield for use with the handheld device.

8. The calibration system of claim 1, wherein the handheld device controls the video switch device to output the test patterns to the first display device, and after capturing the test patterns displayed on the first display device, controls the video switch device to output the test patterns to the second display device.

9. A calibration method for a multi-display system, comprising:

   providing a multi-display system including a video switch device and a first and a second display device, the video switch device outputting test patterns, the video switch device including a first and a second output port for respectively coupling to the first and the second display device;
   using a handheld device and via a control program, capturing the test patterns displayed on the first display device and the test patterns displayed on the second display device;
   the handheld device determining at least one adjustment parameter using the test pattern of the first display device as a standard, and transmitting the at least one adjustment parameter to the video switch device; and
   the video switch device adjusting video images to be outputted to the second display device based on the at least one adjustment parameter.

10. The calibration method of claim 9, wherein the step of capturing the test patterns includes:

using the handheld device to control the video switch device to output the test patterns to the first display device;
using the handheld device to capture the test patterns displayed on the first display device;
using the handheld device to control the video switch device to output the test patterns to the second display device; and
using the handheld device to capture the test patterns displayed on the second display device.

11. The calibration method of claim 9, wherein the step of determining the at least one adjustment parameter includes:

the handheld device determining at least one standard image characteristic value based on the test patterns displayed on the first display device;
the handheld device determining at least one image characteristic value based on the test patterns displayed on the second display device; and
the handheld device comparing the at least one standard image characteristic value and the at least one image characteristic value to calculate at the least one adjustment parameter.

12. The calibration method of claim 9, further comprising providing a light shield placed between the handheld device and the test patterns.

FIG. 1

EP 3 037 955 A2

FIG. 2A

FIG. 2B

FIG. 2C

FIG. 2D

FIG. 2E

Start

S1: Providing a multi-display system including a video switch device and first and second display devices, the video switch outputting test images and including first and second output ports for respectively coupling to the first and second display devices

S2: Using a handheld device and via a control program, capturing a test image displayed on the first display device and a test image displayed on the second display device

S3: The handheld device determining at least one adjustment value using the test image of the first display device as a standard, and transmitting the at least one adjustment value to the video switch device

S4: The video switch adjusting video images to be outputted to the second display device based on the at least one adjustment value

End

FIG. 3